## Europäisches Patentamt

## European Patent Office

### Office européen des brevets

(11) Veröffentlichungsnummer: **0 350 717**
**A1**

## EUROPÄISCHE PATENTANMELDUNG

(21) Anmeldenummer: 89111806.9

(51) Int. Cl.⁴: **B63B 35/44**

(22) Anmeldetag: 29.06.89

(30) Priorität: 30.06.88 DE 8808490 U

(43) Veröffentlichungstag der Anmeldung:
17.01.90 Patentblatt 90/03

(34) Benannte Vertragsstaaten:
AT BE FR GB IT NL

(71) Anmelder: Still Otto GmbH
Christstrasse 9 Postfach 10 18 50
D-4630 Bochum 1(DE)

Anmelder: Hartmann, Helmut Dr.
Im Rosengarten 1
D-6521 Bechtheim 1(DE)

Anmelder: Nehring, Christoph
Peenestrasse 12
D-4300 Essen(DE)

(72) Erfinder: Hartmann, Helmut, Dr.
Im Rosengarten 1
D-6521 Bechtheim 1(DE)
Erfinder: Nehring, Christoph
Peenestrasse 12
D-4300 Essen(DE)
Erfinder: Dungs, Horst
Am Drüngelbruch 21
D-4690 Herne(DE)
Erfinder: Taron, Herbert
Halterner Strasse 28
D-4350 Recklinghausen(DE)
Erfinder: Wolf, Roland
Stolzestrasse 4
D-4630 Bochum 1(DE)

(74) Vertreter: Dahlkamp, Heinrich-Leo, Dipl.-Ing.
c/o Still Otto GmbH Patentabteilung
Christstrasse 9 Postfach 10 18 50
D-4630 Bochum 1(DE)

(54) **Vorrichtung zur Reinigung von kontaminierten Massen.**

(57) Die Erfindung bezieht sich auf eine Vorrichtung zur Reinigung von kontaminierten Massen, vorzugsweise Schüttgütern, mit Reinigungs-, Förder- und Hilfseinrichtungen.

Erfindungsgemäß ist vorgesehen, daß die Vorrichtung wenigstens eine funktionell zusammengehörige, räumlich konstruktiv miteinander verbunden und auf einem ortsbeweglichen Transportkörper (2), vorzugsweise einem Schwimmkörper, angeordnete Baugruppe (1) aufweist.

Fig. 5

## Vorrichtung zur Reinigung von kontaminierten Massen

Die Erfindung betrifft eine Vorrichtung zur Reinigung von kontaminierten Massen, vorzugsweise Schüttgütern, mit Reinigungs-, Förder- und Hilfseinrichtungen.

Es ist bekannt, derartige Vorrichtungen als aus zahlreichen Einzelbaugruppen bestehende stationäre Anlagen zu erstellen. Dem Bau derartiger Anlagen gehen behördliche Genehmigungsverfahren voraus, welche oft mehrere Jahre dauern. Der Erfindung liegt die Aufgabe zugrunde, eine Vorrichtung der eingangs genannten Art vorzuschlagen, welche u.a. schneller erstellbar ist.

Diese Aufgabe wird erfindungsgemäß dadurch gelöst, daß die Vorrichtung wenigstens eine funktionell zusammengehörige räumlich konstruktiv miteinander verbundene und auf einem ortsbeweglichen Transportkörper angeordnete Baugruppe aufweist. Vorzugsweise ist vorgesehen, daß die Vorrichtung mehrere funktionell zusammengehörige räumlich konstruktiv miteinander verbundene und jeweils auf einem ortsbeweglichen Transportkörper angeordnete Baugruppen aufweist.

Die erfindungsgemäß vollständig oder mit ihren wesentlichen Teilen ortsbeweglich und damit mobil ausgebildete Vorrichtung unterliegt einem vereinfachten und damit kürzeren behördlichen Genehmigungsverfahren.

In weiterer Ausgestaltung der Erfindung kann vorgesehen sein, daß die Transportkörper formgleich ausgebildet sind.

Besonders vorteilhaft ist es, wenn die Transportkörper als Schwimmkörper ausgebildet sind. Dies bietet im Vergleich zu für den Straßentransport oder Bahntransport ausgebildeten Transportkörpern erhebliche Vorteile, da die Schwimmkörper große räumlich und konstruktiv miteinander verbundene Baugruppen aufnehmen können und ein preiswerter und schonender Transport möglich ist. Die Schwimmkörper sind so ausgebildet, daß sie in einfacher Weise für den Betrieb zu einem statischen Verbund untereinander verbindbar sind. Auch der Transport kann in einem statischen Verbund erfolgen. Besonders vorteilhaft ist es, die Schwimmkörper als Schubkähne auszubilden, vorzugsweise als sog. "international genormte" Schubkähne.

Die Verbindung zwischen den Transportkörpern untereinander beschränkt sich im Betriebsfall auf Personalübergänge, Rohrleitungen, Kabelbrücken, Förderbänder od. dgl.. Bei der Trennung bzw. Zusammenführung entsteht also nur ein geringer Aufwand für Montage bzw. Demontage. Die Vorrichtung wird während des Transportes nur unerheblichen schädigenden Witterungseinflüssen ausgesetzt.

In den Zeichnungen sind Ausführungsbeispiele der Erfindung schematisch dargestellt. Es zeigen:

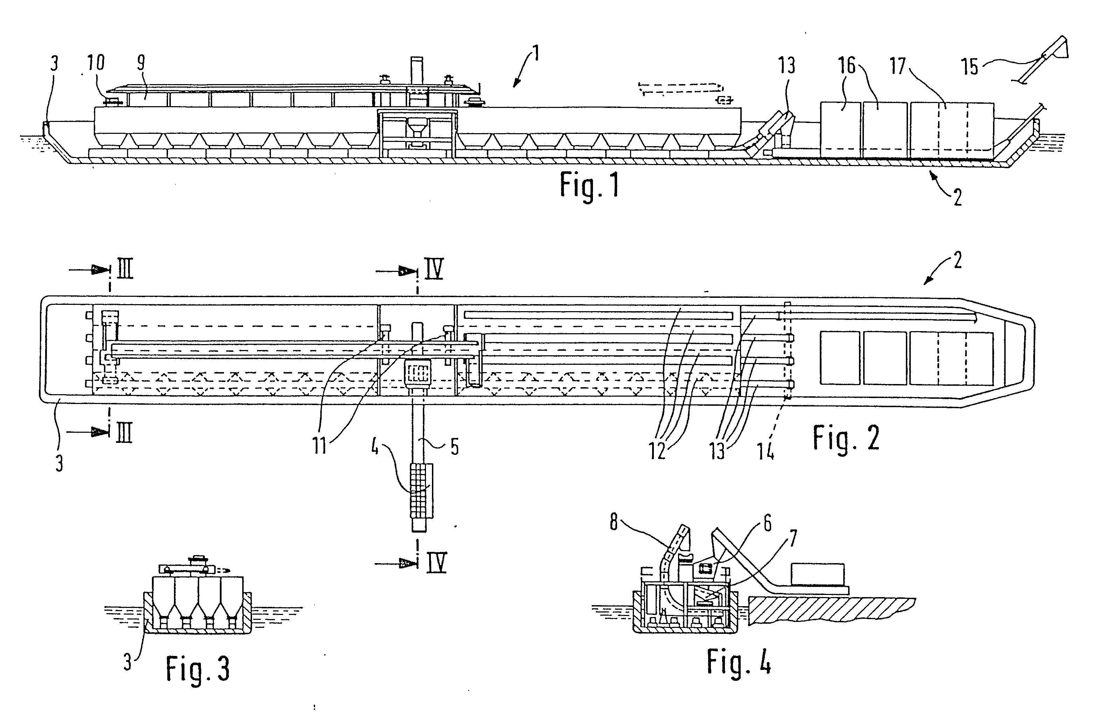

Fig. 1 eine schematische Schnittdarstellung durch einen als Lade- und Bunkerschiff ausgebildeten Transportkörper;

Fig. 2 eine Draufsicht auf die Vorrichtung gemäß Fig. 1;

Fig. 3 eine schematische Schnittdarstellung längs der Linie III-III in Fig. 1;

Fig. 4 eine schematische Schnittdarstellung längs der Linie IV-IV in Fig. 1;

Fig. 5 eine schematische Längsschnittdarstellung durch einen als Reinigungsschiff ausgebildeten Transportkörper;

Fig. 6 eine Draufsicht auf die Vorrichtung gemäß Fig. 5;

Fig. 7 eine Schnittdarstellung längs der Schnittlinie VII-VII in Fig. 6;

Fig. 8 eine Schnittdarstellung längs der Schnittlinie VIII-VIII in Fig. 6;

Fig. 9 eine schematische Längsschnittdarstellung durch einen als Gasreinigungsschiff ausgebildeten Transportkörper;

Fig. 10 eine Draufsicht auf die Vorrichtung gemäß Fig. 9.

Eine insgesamt mit 1 bezeichnete Baugruppe einer Vorrichtung zur Reinigung kontaminierter Massen ist auf einem insgesamt mit 2 bezeichneten Transportkörper angeordnet. Der Transportkörper ist als Schwimmkörper ausgebildet und weist einen Schiffskörper 3 auf. Die Gesamtanordnung ist als Schubkahn nach internationaler Normung ausgebildet. Die Baugruppe 1 weist funktionell zusammengehörige und räumlich konstruktiv miteinander verbundene Einzelelemente auf. Es handelt sich dabei im einzelnen um eine Aufgabemaschine für zu reinigende kontaminierte Massen, einen Kettenförderer 5, eine Prallmühle 6, ein Überkornsieb 7, einen Kettenförderer 8 für Mahlgut, ein Längsverteilerband 9 und ein Querverteilerband 10. Bandmagnete sind mit 11 bezeichnet. Ein Schadgutbunker trägt die Bezugsziffer 12. Weiterhin ist ein Abzugskettenförderer 13, ein Querkettenförderer 14, ein Übergabekettenförderer 15 für einen Transport zu einem Reinigungsschiff, Brennstofftanks 16 und Altöltanks 17 vorgesehen.

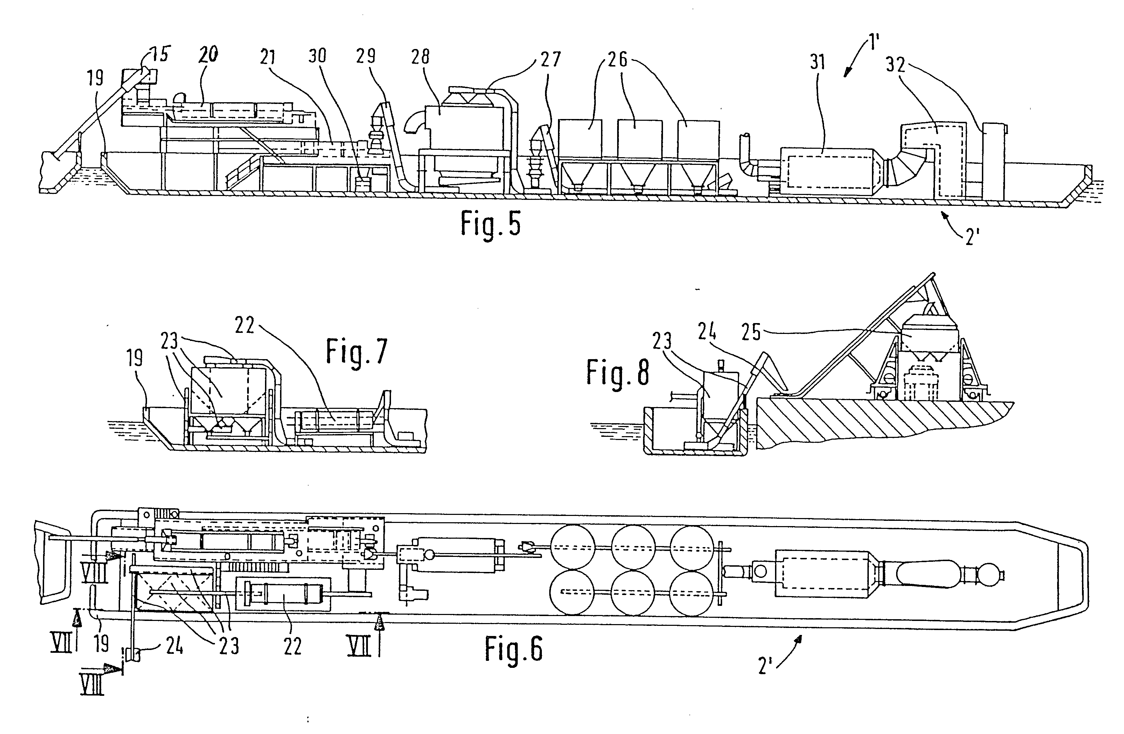

In den Figuren 5 bis 8 ist eine funktionell zusammengehörige, räumlich konstruktiv miteinander verbundene Baugruppe 1' dargestellt, welche auf einem mit 2' bezeichneten ortsbeweglichen Transportkörper angeordnet ist. Auch dieser Transportkörper ist als Schubkahn ausgebildet und stellt ein sog. "Reinigungsschiff" dar. Der Schiffskörper des Transportkörpers 2' ist mit 19 bezeichnet. Die Baugruppe 1' weist eine Vorglühtrommel 20, eine Glühtrommel 21 und eine Kühltrommel 22 auf. Eine Transport- und Lagerungseinrichtung für Kühlgut ist mit 23 bezeichnet. Weiterhin sind ein Reingutaufzug 24 und ein Reingutverladesilo 25 vorgesehen. Entstaubungseinrichtungen und Staubtransporteinrichtungen tragen die Bezugszahlen 26 bzw. 27. Weiterhin ist ein Staubglühofen 28 vorgesehen. Eine Glühstaubtransporteinrichtung trägt die Bezugsziffer 29, während ein Kühlgut-Glühmischer mit 30 bezeichnet ist. Mit 31 bzw. 32 sind eine Abgasnachbrennkammer bzw. eine Abgaskühlquensche bezeichnet.

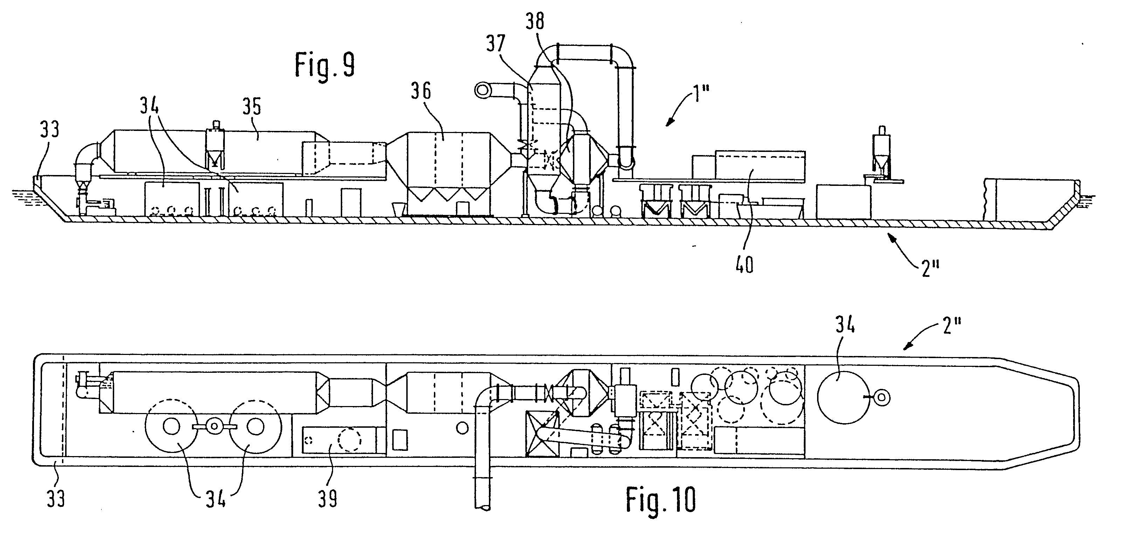

In Fig. 9 und Fig. 10 ist eine mit 1″ bezeichnete Baugruppe dargestellt, welche funktionell zusammengehört und räumlich konstruktiv verbunden sowie auf einem ortsbeweglichen Transportkörper 2″ angeordnet ist, der wiederum als Schubkahn ausgebildet ist. Es handelt sich dabei um ein sog. "Gasreinigungsschiff", dessen Schiffskörper die Bezugsziffer 33 trägt. Die auf diesem Schiffskörper angebrachte Baugruppe weist eine Einrichtung 34 zur Kalkmilchaufbereitung auf, sowie eine Wascheinrichtung 35 für Abgas. Außerdem ist ein Abgaskondensator 36, ein Wärmetauscher 37, eine Entstickungsanlage 38, ein Gipsfilter 39 und ein Metallschlammfilter 40 vorgesehen.

Wie ersichtlich, sind die Transportkörper 2, 2′ und 2″ als jeweils formgleiche Schwimmkörper ausgebildet, welche für den Beförderungsfall zu einer Schubeinheit zusammenfügbar sind. Bei Betrieb der Reinigungsvorrichtung werden die als Schwimmkörper ausgebildeten Transportkörper 2, 2′ und 2″ statisch miteinander verbunden und zu einer Einheit zusammengefaßt, und zwar nicht nur mechanisch, sondern es werden die einzelnen Baugruppen bzw. deren Elemente durch entsprechende logische Zusammenschaltung zu einer ganzeinheitlichen Reinigungseinheit verbunden.

## Ansprüche

1. Vorrichtung zur Reinigung von kontaminierten Massen, vorzugsweise Schüttgütern, mit Reinigungs-, Förder-und Hilfseinrichtungen, dadurch gekennzeichnet, daß die Vorrichtung wenigstens eine funktionell zusammengehörige räumlich konstruktiv miteinander verbundene und auf einem ortsbeweglichen Transportkörper (2) angeordnete Baugruppe (1) aufweist.

2. Vorrichtung nach Anspruch 1, dadurch gekennzeichnet, daß die Vorrichtung mehrere funktionell zusammengehörige, räumlich konstruktiv miteinander verbundene und auf einem ortsbeweglichen Transportkörper (2, 2′, 2″) angeordnete Baugruppen (1, 1′, 1″) aufweist.

3. Vorrichtung nach Anspruch 2, dadurch gekennzeichnet, daß die Transportkörper (2, 2′, 2″)

formgleich ausgebildet sind.

4. Vorrichtung nach Anspruch 2 oder 3, dadurch gekennzeichnet, daß die Transportkörper (2, 2′, 2″) als Schwimmkörper (3, 19, 33) ausgebildet sind.

5. Vorrichtung nach Anspruch 4, dadurch gekennzeichnet, daß die Schwimmkörper (3, 19, 33) untereinander zu einem statischen Verbund verbindbar ausgebildet sind.

6. Vorrichtung nach Anspruch 4 oder 5, dadurch gekennzeichnet, daß die Schwimmkörper (3, 19, 33) als Schubkähne ausgebildet sind.

Fig. 1

Fig. 2

Fig. 3

Fig. 4

Fig.5

Fig.7

Fig.8

Fig.6

EP 0 350 717 A1

Fig. 9

Fig. 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 325 078 (H. KREYENBERG) <br> * Ansprüche 1,2,4,5; Figur * <br> --- | 1,4,6 | B 63 B 35/44 |
| A | DE-A-3 139 821 (E. ZUEBLIN AG et al.) <br> * Ansprüche 1-3,6,12,17,21,23; Figuren 1,2,5-9,12,13,21,22 * <br> --- | 1,4,6 | |
| A | DE-A-2 720 638 (H. THIELE) <br> * Ansprüche 1,4; Figuren 1,2 * <br> --- | 1 | |
| A | SCHIFF UND HAFEN <br> Band 38, Nr. 1, Januar 1986, Seiten 28-30, Hamburg, D; H.-D. BATSCHKO et al.: "Nukleares Kraftwerk auf einer Barge - ein modernes Konzept für den Export" * vollständiges Dokument * <br> --- | 1,2,4-6 | |
| A | DE-A-3 618 851 (G. HEID) <br> * Ansprüche 1,3; Figuren 1-3,8 * <br> ----- | 1-5 | |

| | | | RECHERCHIERTE SACHGEBIETE (Int. Cl.5) |
|---|---|---|---|
| | | | B 63 B 35/32 <br> B 63 B 35/44 |

Der vorliegende Recherchenbericht wurde für alle Patentansprüche erstellt

| Recherchenort | Abschlußdatum der Recherche | Prüfer |
|---|---|---|
| BERLIN | 17-10-1989 | KUEHN P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument